# EUROPEAN PATENT APPLICATION

(11) **EP 0 578 255 A2**
(43) Date of publication of application: **12.01.1994**
(21) Application number: 93111030.8
(22) Date of filing: 09.07.1993
(51) Int. Cl.: B32B 27/08, B29C 67/24, C08J 5/00

(54) **Integrally molded polynorbornene laminated composites**

(30) Priority: 09.07.1992 JP 204258/92
(71) Applicant: NIPPON ZEON CO., LTD., Tokyo (JP)
(72) Inventor: Torii, Masao, Kurashiki-shi, Okayama (JP); Ishimaru, Yoshiharu, Setagaya-ku, Tokyo (JP); Yamato, Motoyuki, Naka-gun, Kanagawa (JP)
(74) Representative: von Kreisler, Alek, Dipl.-Chem.

(57) **Abstract**

An integrally molded laminated composite is obtained by placing a polyolefin tie layer/surface layer laminate into a mold and then polymerizing via metathesis ring-opening polymerization a norbornene-type monomer solution in contact with said polyolefin tie layer. The tie layer functions to isolate the surface layer which contains metathesis inhibiting additives and agent from the catalyst system.

## Description

### BACKGROUND OF THE INVENTION

### 1. Field

This invention relates to integrally molded laminated composites. More specifically, the invention relates to a laminated composite comprising an integrally molded polynorbornene matrix layer, a tie layer, and a surface layer. The tie layer permits the bonding of surface layer materials to the polynorbornene matrix layer.

### 2. State of the Art

Techniques for the manufacture of a molded product by in-mold polymerization such as reaction injection molding (RIM), liquid injection molding (LIM), resin transfer molding (RTM), or reaction casting (RC) are well-known. In the in-mold polymerization of norbornene-type monomers, a reactive solution comprising a norbornene-type monomer and a metathesis catalytic system (a metathesis catalyst and cocatalyst) is injected into a mold and subjected to metathesis bulk ring-opening polymerization as described in U.S. Patent No. 4,426,502. Upon the completion of the polymerization reaction a finished part is removed from the mold.

Molded products obtained by such processes are yellow to dark brown due to the color imparted by the catalyst system. Attempts to overcome this problem by adding a colorizing pigment to the monomer formulation have failed due to the pigment interfering with the catalyst system. In fact, the catalyst system is so sensitive that many additives (fire retardants, processing aids, etc.) utilized in conventional polymeric molding operations cannot be employed in the metathesis polymerization of norbornene-type monomers.

Attempts have been made to solve this problem by laminating a colored or flame retarded plastic surface ply to an underlying polynorbornene matrix. However, such attempts have met with limited success.

U.S. Patent No. 5,137,785 discloses a method for the manufacture of integrally molded laminate comprising a ring-opened norbornene-type polymer matrix layer and a polyolefinic surface layer. Such laminates are obtained by depositing polyolefinic substrate into a mold, conveying a reactive norbornene-type monomer solution into the mold, and then polymerizing the monomer (via metathesis polymerization) in contact with the polyolefinic substrate. A composite laminate with good interface adhesion between the underlying polynorbornene matrix and the polyolefinic surface layer is obtained. However, if the polyolefinic surface layer is loaded with an agent that interferes with the metathesis polymerization reaction, incomplete monomer conversion occurs at the interface between the polymerizing monomer and the surface layer. Consequently, the interface adhesion between the polynorbornene matrix and surface layer is adversely affected. The incomplete polymerization reaction at the polynorbornene matrix/surface layer interface leads to the presence of unreacted monomer which gives off a characteristic foul odor. Even if the formulation additive or agent does not interfere with the polymerization reaction, it may interfere with the fusion bonding of the surface layer to the polynorbornene matrix.

Accordingly, there is a need for a method to integrally fuse a surface layer ply that contains metathesis inhibiting agents to a polynorbornene matrix such that a strong bond is achieved between the surface layer and the underlying matrix.

### SUMMARY OF THE INVENTION

Broadly stated it is an object of the present invention to provide a laminated composite comprising a polynorbornene matrix having a pigmented and/or fire retarded surface layer integrally molded thereon.

It is another object of this invention to provide a po!ynorbornene matrix having an incompatible surface ply molded thereon.

It is a further object of this invention to provide an integrally molded tie layer without the need for special adhesives.

It is a still further object of this invention to provide a method for laminating an surface layer containing metathesis inhibiting additives onto a polynorbornene matrix.

These and other objects of the invention are accomplished by placing a bilayered laminate comprising a polyolefinic tie layer and a thermoplastic surface layer containing metathesis inhibiting additives or agents into a mold cavity, conveying a reactive monomer solution comprising at least one norbornene-type monomer into the mold cavity in contact with at least a portion of the surface of the polyolefinic tie layer, and then bulk polymerizing the reaction solution in contact with said tie layer.

### DESCRIPTION OF THE INVENTION

The integrally molded laminated composites of the present invention are prepared by the in-mold ring-opening bulk polymerization of at least one norbornene-type monomer in contact with the surface of a polyolefinic tie layer that has been laminated to a thermoplastic surface layer. The tie layer/surface layer laminate is placed into a mold cavity whereupon a reactive monomer formulation comprising at least one norbornene-type monomer, a metathesis catalyst system, and optional ingredients is conveyed into the mold cavity so as to contact the surface of the polyolefinic tie layer, and polymerized under suitable polymerization conditions to be described below. The tie layer is utilized to laminate an incompatible surface layer on to a polynorbornene matrix.

By norbornene-type or norbornene monomer is meant that the monomer employed in the method of this invention contains at least one norbornene group. By polynorbornene or norbornene-type polymer is meant that the polymer(s) employed is derived from a monomer(s) containing at least one norbornene group.

### (NORBORNENE-TYPE MONOMERS)

The matrix polymer utilized in the composites of this invention is a polymer obtained by the metathesis ring-opening polymerization of at least one norbornene-type monomer. The use' of a tricyclic or higher cyclic norbornene-type monomer is preferred and gives the integrally molded composites of this invention high thermal deformation temperatures. Examples of suitable norbornene-type monomers include tricyclic monomers such as dicyclopentadiene, dihydrodicyclopentadiene, and the like; tetracyclic monomers such as tetracyclododence and the like; pentacyclic monomers such as tricyclopentadiene, and the like; heptacyclic monomers such as tetracyclopentadiene and the like. The alkyl (e.g., methyl, ethyl, propyl, butyl, and the like), alkylidene (e.g., ethylidene, and the like), aryl (e.g., phenyl, tolyl, naphthyl, and the like), and polar (e.g., ester, ether, nitrile, halogen, and the like) derivatives of the foregoing monomer types also are within the scope of this invention. The tricyclic, tetracyclic, and pentacyclic monomers are preferred because they are easily obtained, easily polymerized, and polymers thereof are heat resistant.

The foregoing monomers can be used alone to obtain a homopolymer product or two or more can be mixed to obtain a copolymer product. If a thermoset polymer is desired, a crosslinking monomer can be employed. Suitable crosslinking monomers are any polycyclic norbornene-type monomers containing two or more reactive double bonds. Examples include dicyclopentadiene, tricyclopentadiene, tetracyclododecene, and the like. If the norbornene-type monomer selected for use herein is a crosslinking monomer, the use of other crosslinking comonomers are not necessary.

The foregoing tricyclic or higher cyclic structure norbornene-type monomers can be copolymerized with bicyclic and/or monocyclic olefins monomers so long as the properties of the resulting polymer is not impaired. Examples of suitable bicyclic olefins include norbornadiene, 2-norbornene, 5-methyl-2-norbornene, 5-ethylidene-2-norbornene, 5-phenyl-2-norbornene, and the like. Suitable monocyclic olefins include cyclobutene, cyclopentene, cyclopentadiene, cyclooctene, cyclododecene, and the like.

### (CATALYST SYSTEM)

Any known metathesis catalyst and cocatalyst suitable for the ring-opening polymerization of norbornene-type monomers can be employed in the invention (see, for example, Japanese laid open application Nos. 58-127728, 58-129013, 59-51911, 60-79035, 60-18511, and 61-126115. Examples of suitable metathesis catalysts are the halides, oxyhalides, oxides, organic ammonium sales of tungsten, molybdenum, and tantalum, and the like. Examples of suitable cocatalysts are alkylaluminum halides, alkoxyalkylaluminum halides, aryloxyalkylaluminum halides, organotin compounds, and the like.

In addition to the catalyst and cocatalyst, an activating agent can be employed as disclosed in Japanese laid open application No. 60-79035. Halohydrocarbons such as chloroform, carbon tetrachloride, hexachloropentadiene, or metal halides such as silicon tetrachloride, germanium tetrachloide, and lead tetrachloride can be used.

The amount of metathesis catalyst employed ranges from about 0.01 to about 50 mmol, preferably about 0.1 to about 10 mmol per mole of norbornene-based monomer utilized. The amount of cocatalyst utilized ranges from about 0.1 to about 200 mole ratio based on the catalyst component, preferably in the 2 to 10 (mole ratio) range.

Preferably, the metathesis catalyst and cocatalyst are dissolved in the monomer. So long as product quality is not affected, the catalyst and cocatalyst can be suspended or dissolved in a solvent before introduction into the monomer.

### (MATRIX ADDITIVES)

The polymer properties of the matrix material can be modified by the addition of additives such as antioxidants, filler materials, strengthening materials, pigments, coloring agents, foaming agents, flame retardants, lubricants, elastomers, and/or dicyclopentadiene-type hydrogenated thermopolymer resins. The additives can be added to either one or both reactant solutions, or may be added to a third reactant solution.

Suitable antioxidants include phenolic, phosphorus, or amine-type compounds that are commonly used in plastics and rubbers.

Suitable fillers include inorganic materials such as milled glass, long glass fibers, glass mat, carbon black, talc, calcium carbonate, mica, and the like. Reinforcing fibers can be used in this invention to strengthen the outer layer.

Suitable elastomers include natural rubber, polybutadiene, polyisoprene, styrene-butadiene copolymer (SBR), styrene-butadiene-styrene block copolymer (SBS), styrene-isoprene-styrene block copolymer (SIS), ethylene-propylene-diene terpolymer (EPDM), ethylene-vinyl acetate copolymer (EVA), and their hydrogenated derivatives. The addition of the elastomer to the reactant solution(s) improves reactant solution viscosity as well as the impact properties of the molded composite product.

In this invention, the reinforcing material may be placed in the mold cavity and then the reaction solution is fed into the cavity and allowed to polymerize in the presence of the reinforcing material. Alternatively, the fiber fillers can be mixed in the reactant solutions before their introduction into the mold. Examples of suitable reinforcing materials are glass fibers, aramid fibers, carbon fibers, ultrahigh molecular weight polyethylene fibers metal fibers, polyropylene fibers, aluminum coated glass fibers, cotton, acrylic resin fibers, boron fibers, silicon carbide fibers, alumina fibers, and the like. The reinforcing agents can be in the form of long fibers, chopped strand-type mat, fabric, chopped fiber, or many other forms suitable for providing reinforcement. The surface of these reinforcing materials can be treated with a silane coupling agent to improve their adhesion to the resin. There are no restrictions to the amount of reinforcing material utilized, but it is commonly not less than about 20 weight percent, preferably between about 30 to 70 weight percent.

### (TIE LAYER PLY)

The tie layer of the present invention comprises a polyolefin ply laminated to a surface layer ply. The polyolefin ply is always laminated onto the polynorbornene matrix. The tie layer serves to bond the surface layer ply to the polynorbornene matrix as well as to segregate the polymerization inhibitors contained in the surface layer from the metathesis catalyst system during the polymerization reaction.

Suitable polyolefin resins employed in the invention are high-density polyethylene (HDPE), medium-density polyethylene (MDPE), low-density polyethylene (LDPE), super-high-molecular-weight polyethylene, ethylene-propylene copolymer, ethylene-butene-1 copolymer, polypropylene, polybutene-1, polypentene-1, poly-4-methylpentene-1, ethylene-propylene rubber, ethylene-propylene-diene terpolymer (EPDM), ethylene-acrylate copolymer, ethylene vinyl chloride copolymer, polystyrene chlorinated derivatives of the forgoing polymers also can be employed, and mixtures thereof.

Other resins that can be utilized include hydrocarbon based thermoplastic elastomers, nonvulcanized rubber, or mixtures thereof. Examples of hydrocarbon based thermoplastic elastomers include styrene-butadiene block copolymer, styrene-isoprene block copolymer, styrene-butadiene-styrene block copolymer, styrene-isoprene-styrene block copolymer, and styrene-isoprene-styrene-isoprene-styrene block copolymer. Examples of nonvulcanized rubber include polybutadiene, polyisoprene, styrene-butadiene copolymer, chloroprene, butyl rubber, and the like. These hydrocarbon based thermoplastic elastomers and nonvulcanized rubbers also can be blended with the polyolefinic polymers described above.

### (SURFACE LAYER PLY)

The surface layer ply can be selected from any thermoplastic that can be compounded with the desired additive and which can be fusion bonded to the polyolefinic tie layer. Preferably, the surface layer resin is selected from the same material as the tie layer. In particular, an olefin based resin is preferred. High density polyethylene, medium density polyethylene, and polypropylene are particularly preferred for their excellent surface properties (e.g., surface hardness, luster, etc.).

This invention is very effective especially when employing surface layer additives (at high concentrations) that significantly interfere with the metathesis polymerization of the norbornene-type monomers. Additives or agents that interfere with the polymerization include those that contain hydroxyl groups, carboxyl groups, amino groups, compounds with active hydrogen, or compounds containing oxygen, nitrogen, sulfur, or phosphorus.

Specific additives can be employed are filters, reinforcing agents, flame retardants, pigments, antioxidants, ultraviolet (UV) absorbing agents, antistatic agents, lubricants, etc.

Suitable fillers include carbon blacks, saw dust, calcium carbonate, magnesium carbonate, talc, titanium oxide, polymer powder, diatomaceous earth, quartz powder, silica sand, and silicates such as kaolin, clay, barium sulfate, mica, etc.

Channel Black, which is a carbon black having a high surface activity, oxides, urethane resins, and epoxy resin powders, all have a high degree of metathesis polymerization interference.

Suitable reinforcing agents employed include glass powder and glass fibers, carbon fibers, alumina, beryllium oxide, iron oxide, aluminum powder, and copper powder. These agents have a high degree of metathesis polymerization interference. The aluminum and copper metal powders do not themselves interfere with the metathesis reaction. However, upon storage they may be oxidized. As stated above, oxides are metathesis polymerization inhibitors.

Suitable flame retardants used are antimony compounds, inorganic compounds, phosphorus compounds, chlorine compounds, bromine compounds, and the like. Specific examples include antimony pentoxide, antimony trioxide, sodium antimonate, ammonium fluoborate, barium metaborate, zinc borate, ammonium orthophosphate, ammonium orthophosphate, aluminum hydroxide, zinc borate, phosphoric acid ester, triphenyl phosphate, tricresyl phosphate, trixylene phosphate, chlorinated organopolyphosphate, trichloropropyl phosphate, chlorinated organophosphate, chloroparaffin, 1,1,2,2-tetrabromoethane, 1,2,3,4-tetrabromoethane, 1,2,3-tribromopropane, brominated aromatic phthlates such as FR-45B from Great Lakes Chemical [e.g., tetrabromophthalic acid bis(2-ethylhexelester)] brominated polymers and the like. Among these antimony thoxide and the phosphorus compounds pentoxide significantly interferes with the metathesis polymerization reaction.

Suitable pigments include carbon black, metal oxides, metal sulfides, metal salts, metal ferrocyanides, azo dyes, phthalocyanin dyes, vat dyes, printing chelate dyes, quinacridone, dioxazine, which are organic dyes. In detail, these comprise barium sulfate, calcium carbonate, zinc oxide, titanium oxide, carbon black, iron black, aniline black, chrome yellow, cadmium yellow, yellow ochre, benzidine yellow, hanza yellow, chrome vermilion, chrome orange, cadmium orange, cadmium red, rouge, red lead, Permanent Red 4R, cobalt violet, anthraquinone violet, ultramarine, cobalt blue, chrome green, phthalocyanin green, aluminum powder, bronze powder, etc. Among these, metal oxides, metal sulfides, and azo dyes significantly interfere with the polymerization reaction.

The antioxidants employed include 2,6-di-tertiary-butyl-p-cresol, 2,2'-methylene bis(4-methyl-6-tertiary-butyl phenol), N,N'-di-2-naphthyl-p-phenylenediamine, 2,5-di(tertiary amyl)hydroquinone, dilauryl thiopropionate, triisodecyl phosphite, N-salicyloyl-N'-aldehyde hydrazine, phosphorus-base antioxidants, and metal deactivating agents, and the like.

Suitable UV-absorbing agents include salicylates, benzophenones, benzotriazoles and the like.

The antistatic agents employed are selected from polyoryethylene alkylamine, alkylphenolethylene oxides, glycerin stearate, fatty acid amine derivatives, and the like.

Suitable lubricating agents include graphite, molybdenum disulfide, and teflon powder.

The amounts of agents and additives employed differ according to their type and purpose. For example, for fillers and flame retardants, the usual content ranges from about 1 to about 60 weight percent of the surface ply, preferably from about 5 to about 40 weight percent of the surface ply. For pigments, antioxidants, and other additives, from about 0.01 to about 30 weight percent, preferably from about 0.1 to about 20 weight percent of the surface ply are added.

### (TIE LAYER PLY/SURFACE LAYER PLY LAMINATE)

The tie layer/surface layer laminate of the present invention can be manufactured by conventional coextrusion. Alternatively, individually formed films or sheets can be thermally press bonded. The thickness of a film or sheet is selected according to its purpose. The usual tie layer thickness is commonly less than 3 mm, and preferably from about 0.01 to about 1.0 mm in thickness. Most preferably the tie layer thickness ranges from about 0.02 to about 0.5 mm. The surface layer thickness is commonly less than 10 mm, preferably from about 0.05 to about 5 mm and most preferably from about 0.1 to about 2 mm. When the adhesion of the tie layer to the surface layer is insufficient, a third ply (e.g., adhesive) that ties the tie layer to the surface layer can be employed.

### (MOLDED COMPOSITE)

According to the method of this invention the tie layer/surface layer laminate is affixed to a surface of a mold cavity wall. The tie layer/surface layer laminate can be affixed to any location on the mold cavity surface. More than one tie layer/surface layer laminate can be affixed to the mold cavity surface. For example, in the case where the mold cavity has a rectangular configuration a sheet like tie layer/surface layer laminate configuration can be affixed to the top surface of the mold cavity, to the bottom surface of the mold cavity, to the side wall of the mold cavity, or combinations thereof. The tie layer/surface layer laminate can be coextensive with the entire mold cavity surface (e.g., top, bottom or side) or can be coextensive with only a portion thereof, the effect of which is manifested in an entire surface or a portion of a surface of the polynorbornene matrix being laminated. As stated above, the only proviso is that where adhesion to the polynorbornene-type matrix is desired the tie layer ply must be in contact with the polymerizing monomer solution.

The tie layer or tie layer/surface layer laminate can be affixed to the mold cavity surface by any adhesive that does not permanently bond to the mold cavity surface. The adhesive should be selected so that it readily releases from the mold cavity surface (after the polymerization reaction) with minimal force. The adhesive is applied to the surface of the laminate that will contact the mold cavity wall. Alternatively, double sided tape can be used to affix the laminate component to the mold cavity surface or wall.

For molds having intricate configurations the tie layer/surface layer laminate can be vacuum formed onto the mold cavity surface.

Following the affixment of the tie layer/surface layer laminate to the mold cavity surface(s), a reaction solution comprising a norbornene-type monomer and metathesis catalyst system is injected into the mold (in intimate contact with the surface of the tie layer ply) and allowed to polymerize by bulk ring-opening polymerization. Following the polymerization reaction (after allowing sufficient time for cooling), an integrally molded composite comprising a polynorbornene matrix/tie layer/surface layer is removed from the mold. The composite has excellent interface adhesion between the laminate layers without the need for adhesives.

Polyolefin tie layers are integrally molded to the polynorbornene matrix with superior polyolefin to polynorbornene matrix interface adhesion. Without wishing to be bound by a specific theory, it is believed that the strong interface bond is partly attributable to the melt adhesion that occurs at the surface of the polyolefin/polynorbornene matrix interface. The melt adhesion occurs because of the high exotherm temperature (in excess of 150°C) generated as the norbornene-type monomers polymerize. Since the norbornene-type monomers are in contact with the polyolefin tie layer during polymerization, an intimate interface bond is formed as the polyolefin melt adheres to the polynorbornene matrix. Since the polyolefin adheres well to various surface layer laminates, it serves as an excellent tie layer between a polynorbornene-type matrix and the surface layer.

### (POLYMERIZATION)

In the method of the present invention, the bulk polymerization of norbornene-type monomers in the presence of the metathesis catalyst system is carried out in a mold. A small amount of inert solvent may be present in the formulation so long as the solvent does not adversely affect the polymerization reaction or polymer product produced therefrom.

A preferred bulk ring-opening polymerization method is to divide a norbornene-type monomer solution into two portions and to store them in separate containers. Into one container, the metathesis catalyst is added to form one reactant solution and into the other, the cocatalyst is added to form the other reactant solution. The activating agent, if desired, is preferably added to the cocatalyst reactant solution, but it also can be added to either container or to both containers. The two reactant solutions are then mixed and injected into a mold wherein the reactive solution is in intimate contact with at least one surface of the tie layer ply. The bulk ring-opening polymerization reaction is then carried out in the mold cavity.

Molds made of resin, wood, steel, or aluminum can all be used safely. The mold cavity may be of any shape depending on the desired configuration of the composite product.

The two reactant solutions are mixed by using a conventional reaction injection mold (RIM) apparatus. In this case the two reactant solutions are stored in two separate vessels and serve as the source for the two reactant feed streams. The two streams are intimately mixed in the mixing head of the RIM apparatus (impingement mixing head) to form the reaction solution. The mixture is injected into a preheated metal mold and bulk polymerized to produce the integrally molded composite product.

Optionally, after mixing the two reactant solutions, the mixture can be conveyed (poured or injected) into a mold in several portions (batch feeding) as taught in U.S. Patent No. 4,426,502. Alternatively the reaction solution can be injected in a continuous mode. With this method, the apparatus is smaller in comparison to an impingement type mixing apparatus, allowing the process to be carried out at low operating pressures. When a large amount of glass fiber reinforcement is utilized within the mold, the injection of reaction solution may be carried out at a low injection speed to allow the solution to homogeneously infiltrate the glass fibers.

This invention is not limited to a two reactant stream process. A third reactant stream (or a plurality of streams) containing an additional reactant(s) or additive(s) can be employed in the present process.

The mold temperature employed is commonly greater than room temperature (e.g., above 30°C), preferably between about 40 to 200°C, and more preferably between about 50 to 130°C. The mold pressure is commonly between about 0.1 to 100 kg/cm².

The polymerization time can be determined as needed. However, the time from feeding the reactive solution into the mold cavity to the onset of the polymerization preferably should be less than 20 minutes, preferably within 5 minutes, and more preferably within 2 minutes.

The reactant solutions are stored under an inert gas atmosphere such as nitrogen, and also should be processed under such an inert atmosphere. However, the mold does not necessarily have to contain an inert gas.

A foaming agent can be placed in one or both of the reactant solutions. Suitable foaming agents include aliphatic hydrocarbons such as pentane, hexane, and the like, halohydrocarbons such as methylene chloride, trichlorofluoromethane, dichlorodifluoromethane, and the like; or inert gases such as nitrogen, argon, and the like.

Certain embodiments of the present invention will now be described with reference to the following examples which are not intended to serve as a limitation of the scope thereof. In the examples, all parts are parts by weight and all percentages are percentages by weight unless otherwise specified.

### EXAMPLE 1

A 90/10 (parts by weight) mixture of high density polyethylene (5300B, manufactured by the Mitsui Sekiyu Kagaku Co.) and a red phosphorus-based flame retardant (Novared, manufactured by the Rinkagaku Kogyo Co.) were compounded in an extrusion machine and pelletized. Using two vent-type extrusion machines (Mitsubishi Jukogyo Co.), the high density polyethylene containing the flame retardant and a low density polyethylene (141, manufactured by the Mitsui Sekiyu Kagaku Co.) were co-extruded to form a tie layer/surface layer laminated sheet. The coextruded laminated sheet was fusion bonded by passing it through a feed block machine ad then passing it through a T-die to form a tie layer/surface layer laminated film (each layer had a thickness of 0.5 mm). The barrel temperatures of the extruders were about 140°C for HDPE extruder and about 120°C for LDPE extruder.

### EXAMPLE 2

Catalyst and cocatalyst reactant formulations were prepared as follows:
Equal aliquots of a mixed monomer solution containing 90 parts of dicyclopentadiene (DCPD) and 10 parts of tricyclopentadiene (TCP) were placed into two vessels. Into one of the vessels, diethylaluminum chloride (DEAC) cocatalys, n-propanol, and silicon tetrachloride (activating agent) were added to give concentrations of 40 mmoles, 40 mmoles, and 10 mmoles, respectively. Into the other vessel, tri(tridecyl)ammonium molybdate catalyst was added to give a concentration of 10 mmoles.

The tie layer/surface layer laminate was placed with the surface layer (HDPE) side down on one side of a split mold having a rectangular mold cavity configuration. The mold was then heated to 70°C. The catalyst and cocatalyst formulations were mixed in a 1:1 ratio and injected into the cavity of the mold. The polymerization reaction proceeded for about three minutes, resulting in an integrally molded laminated composite comprising a polynorbornene-type matrix with a tie layer ply/surface layer ply laminate.

The composite article was held over an alcohol lamp (surface layer facing flame) for 10 seconds. The article did not burn or catch fire.

### EXAMPLE 3 (COMPARISON)

A single ply of HDPE flame retarded film prepared from the compound of Example 1 was placed in a mold and molded as set forth in Example 2.

The polynorbornene matrix and the film did bond and there was unreacted monomer present at the polynorbornene matrix/HDPE interface. The polynorbornene matrix interface was sticky and odorous.

### EXAMPLE 4

The flame-retardant filler of Example 1 was replaced with carbon black (#40B, manufactured by the Mitsubishi Kasei Co.). Following the procedure of Example 1 a two ply laminate consisting of a pigment-containing HDPE surface layer and LDPE tie layer was prepared.

The laminate was press molded into a box-shaped configuration with the HDPE ply facing outwards.

The box-shaped tie layer/surface layer laminate was placed into a mold having a square cavity and then processed according to the procedure of Example 2. The reaction solution was injected into the mold in contact with the tie layer ply and polymerized.

The polynorbornene matrix and the tie layer/surface layer laminated exhibited excellent interface adhesion.

### EXAMPLE 5 (COMPARISON)

A single layer film consisting of HDPE and the carbon black of Example 4 was prepared.

The single layer film was thermally pressed into a box-like configuration and molded as set forth in Example 4.

There was no stickiness between the polynorbornene matrix and the film. However, the polynorbornene matrix and HDPE did not bond. A monomer odor was detected.

## Claims

1. A molded composite article comprising a ring-opened norbornene-type polymer matrix a polyolefinic tie layer integrally molded to said norbornene-type polymer matrix, and a thermoplastic surface layer laminated to said tie layer, wherein said norbornene-type polymer matrix is derived from at least one norbornene-type monomer which is polymerized via in-mold metathesis bulk polymerization in contact with a surface of said olefinic polymer tie layer, and said surface layer includes an additive selected from the group consisting of pigments, flame retardants, antioxidants, UV-absorbing agents, antistatic agents, fillers, reinforcing agents, lubricants, and mixtures thereof.

2. The molded composite of claim 1 wherein said tie layer is selected from the group consisting of high-density polyethylene, medium-density polyethylene₁ low-density polyethylene, super high molecular weight polyethylene, ethylene-propylene copolymer, ethylene-butene-1 copolymer, polypropylene, polybutene-1, polypentene-1, poly-4-methylpentene-1, ethylene-propylene rubber, ethylene-propylene-diene terpolymer, ethylene acetate copolymer; styrene-butadiene block copolymer, styrene-isoprene block copolymer, styrene-butadiene-styrene block copolymer, styrene-isoprene-styrene block copolymer, polybutadiene, polyisoprene, styrene-butadiene copolymer, and mixtures thereof.

3. The molded composite of claim 1 wherein said surface layer is selected from the group consisting of high density polyethylene, medium density polyethylene, and polypropylene.

4. The molded composite of claim 1 wherein said norbornene-type monomer is selected from the group consisting of dicyclopentadiene, dihydrocyclopentadiene, tetracyclododecene, tricyclopentadiene tetracyclopentadiene, including the alkyl, alkylidenyl, halogen, and polar substituents thereof.

5. The molded composite of claim 4 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooelene, cyclododecene, and mixtures thereof.

6. The molded composite of claim 1 wherein said additive is a flame retardant selected from the group consisting of antimony pentoxide, antimony trioxide, sodium antimonate, ammonium fluoroborate, barium metaborate, zinc borate, ammonium orthophosphate, aluminum hydroxide, phosphoric acid ester, triphenyl phosphate, tricresyl phosphate, trixylene phosphate, chlorinated organophosphate, chloroparaffin, 1,1,2,2-tetrabromoethane, 1,2,3-tribromopropane, tetrabromophthalic acid bis(2-ethylhexylester), and mixtures thereof.

7. The molded composite of claim 6 wherein said flame retardant is present in the amount of from 1 to about 60 weight percent of said surface layer.

8. The molded composite of claim 1 wherein said pigment is selected from azo dyes, phthalocyanin dyes, vat dyes, quinacridone, dioxazine, barium sulfate, calcium carbonate, zinc oxide, titanium oxide, carbon black iron black, aniline black, chrome yellow, cadmium yellow, yellow ochre, benzidine yellow, hanza yellow, chrome vermillion, chrome orange, cadmium orange, cadmium red, red lead, cobalt violet, anthraquinone violet, cobalt blue, chrome green, phthalocyanin green, aluminum powder, bronze powder, and mixtures thereof.

9. The molded composite of claim 8 wherein said pigment is present in the amount of from 0.01 to about 30 weight percent of said surface layer.

10. The molded composite of claim 1 wherein said antioxidant is selected from the group consisting of 2,6-di-tert-butyl-p-cresol, 2,2'-methylene bis-(4-methyl-6-tert-butyl phenol), N,N'-di-2-naphthyl-p-phenylenediamine, 2,5-di-(tertiary amyl)hydroquinone, dilauryl thiopropionate, triisodecyl phosphite, N-saliaylayl-N'-aldehyde hydrazine, and mixtures thereof.

11. A molded composite article comprising a ring-opened norbornene-type polymer matrix, a polyethylene tie layer integrally molded to said norbornene-type polymer matrix, and a surface layer selected from the group consisting of high density polyethylene, medium density polyethylene, and polypropylene which is laminated to said tie layer, wherein said norbornene-type polymer matrix is derived from at least one norbornene-type monomer which is polymerized via in-mold metathesis polymerization in contact with a surface of said tie layer, and said surface layer includes an additive selected from pigments, flame retardants, antioxidants, UV-absorbing agents, antistatic agents, fillers, reinforcing agents, lubricants, and mixtures thereof.

12. The molded composite of claim 11 wherein said tie layer is derived from low density polyethylene and said surface layer is derived from high density polyethylene.

13. The molded composite of claim 12 wherein said surface layer includes an additive selected from the group consisting of pigments, flame retardants, and mixtures thereof.

14. The molded composite of claim 13 wherein said pigment is present in the amount of from about 1 to about 60 weight percent of said surface layer.

15. The molded composite of claim 13 wherein said flame retardant is present in the amount of from about 0.01 to about 30 weight percent of said surface layer.

16. A method for integrally molding a laminated composite to a norbornene-type polymer matrix comprising the steps of providing a mold having a mold cavity; placing a bilayered laminate within said mold cavity, said laminate comprising a polyolefinic tie layer ply laminated to a thermoplastic surface layer ply, said surface layer ply including an additive selected from the group consisting of pigments, flame retardants, antioxidants, UV-absorbing agents, antistatic agents, fillers, reinforcing agents, lubricants, and mixtures thereof, and wherein said laminate is placed in said mold such that said surface layer ply is in intimate contact with the mold cavity surface; feeding a bulk polymerizable liquid reaction solution comprising at least one norbornene-type monomer, a metathesis catalyst, and a cocatalyst in said mold such that said liquid reaction solution is in contact with said polyolefinic ply of said laminate; and polymerizing said reaction solution.

17. The method of claim 16 wherein said tie layer ply is selected from the group consisting of high-density polyethylene, medium-density polyethylene, low-density polyethylene, super high molecular weight polyethylene, ethylene-propylene copolymer, ethylene-butene-1 copolymer, polypropylene, polybutene-1, polypentene-1, poly-4-methylpentene-1, ethylene-propylene rubber, ethylene-propylene-diene terpolymer, ethylene acetate copolymer; styrene-butadiene block copolymer, styrene-isoprene block copolymer, styrene-butadiene-styrene block copolymer, styrene-isoprene-styrene block copolymer, polybutadiene, polyisoprene, styrene-butadiene copolymer, and mixtures thereof.

18. The method of claim 16 wherein said surface layer is selected from the group consisting of high density polyethylene, medium density polyethylene, and polypropylene.

19. The method of claim 16 wherein said norbornene-type monomer is selected from the group consisting of dicyclopentadiene, dihydrocyclopentadiene, tetracyclododecene, tricyclopentadiene tetracyclopentadiene, including the alkyl, alkylidenyl, halogen, and polar substituents thereof.

20. The method of claim 19 wherein said monomer further comprises a cycloolefin monomer selected from the group consisting of 2-norbornene, 5-methyl-2-norbornene, 5-ethylidene-2-norbornene, 5-phenyl norbornene, cyclobutene, cyclopentene, cyclopentadiene, cyclooctene, cyclododecene, and mixtures thereof.

21. The method of claim 16 wherein said additive is a flame retardant selected from the group consisting of antimony pentoxide, antimony trioxide, sodium antimonate, ammonium fluoroborate, barium metaborate, zinc borate, ammonium orthophosphate, aluminum hydroxide, phosphoric acid ester, triphenyl phosphate, tricresyl phosphate, trixylene phosphate, chlorinated organophosphate, chloroparaffin, 1,1,2,2-tetrabromoethane, 1,2,3-tribromopropane, tetrabromophthalic acid bis(2-ethylhexylester), and mixtures thereof.

22. The method of claim 16 wherein said flame retardant is present in the amount of from 1 to about 60 weight percent of said surface layer.

23. The method of claim 22 wherein said pigment is selected from azo dyes, phthalocyanin dyes, vat dyes, quinacridone, dioxazine, barium sulfate, calcium carbonate, zinc oxide, titanium oxide, carbon black, iron black, aniline black, chrome yellow, cadmium yellow, yellow ochre, benzidine yellow, hanza yellow, chrome vermillion, chrome orange, cadmium orange, cadmium red, red lead, cobalt violet, anthraquinone violet, cobalt blue, chrome green, phthalocyanin green, aluminum powder, bronze powder, and mixtures thereof.

24. The method of claim 23 wherein said pigment is present in the amount of from 0.01 to about 30 weight percent of said surface layer.

25. The method of claim 16 wherein said antioxidant is selected from the group consisting of 2,6-di-tert-butyl-p-cresol, 2,2'-methylene bis-(4-methyl-6-tert-butyl phenol), N,N'-di-2-naphthyl-p-phenylenediamine, 2,5-di-(tertiary amyl)hydroquinone, dilauryl thiopropionate, triisodecyl phosphite, N-saliaylayl-N'-aldehyde hydrazine, and mixtures thereof.

26. The method of claim 16 wherein said tie layer ply is a polyethylene, and said surface layer is selected from the group consisting of high density polyethylene, medium density polyethylene and polypropylene, and said additive is selected from pigments, flame retardants and mixtures thereof.

27. The method of claim 26 wherein said tie layer is low density polyethylene and said surface layer is high density polyethylene.

28. The method of claim 27 wherein said reactive solution comprises dicyclopentadiene.

29. The method of claim 28 wherein said reactive solution further comprises tricyclopentadiene.
